# EUROPÄISCHE PATENTANMELDUNG

(11) **EP 4 190 689 A1**
(43) Veröffentlichungstag der Anmeldung: **07.06.2023**
(21) Anmeldenummer: 21212096.8
(22) Anmeldetag: 02.12.2021
(51) Int. Cl.: B64C 11/38, F04B 23/04

(54) **PROPELLERANORDNUNG MIT PUMPENEINHEIT**

(71) Anmelder: MT-Propeller Entwicklung GmbH, 94348 Atting (DE)
(72) Erfinder: MÜHLBAUER, Gerd, 94360 Mitterfels (DE); ALBRECHT, Martin, 94315 Straubing (DE)
(74) Vertreter: advotec.

(57) **Zusammenfassung**

Die Erfindung betrifft eine hydraulisch verstellbare Propelleranordnung für ein Luft-, Land- oder Wasserfahrzeug, umfassend ein Triebwerk (16), eine Propellereinheit (12) mit einem Propeller (14), der mindestens zwei Propellerblätter (30) umfasst, deren Einstellwinkel hydraulisch einstellbar ist, eine Drucksteuereinheit (22), die einen Fluiddruck zum Einstellen des Einstellwinkels der Propellerblätter (30) vorgibt und die über eine Steuerleitung hydraulisch mit einem Druckraum (44) des Propellers (14) verbunden ist, sowie eine Pumpeneinheit (24), die der Drucksteuereinheit (22) ein Hydraulikfluid bereitstellt, das unter einem Basisdruck steht. Die Pumpeneinheit (24) ist eine von dem Triebwerk (16) und der Drucksteuereinheit (22) unabhängig angetriebene Einheit und umfasst mindestens eine elektrisch betriebene Hauptpumpe (94), die das unter dem Basisdruck stehende Hydraulikfluid für die Drucksteuereinheit (22) bereitstellt.

## Beschreibung

Die Erfindung betrifft eine hydraulisch verstellbare Propelleranordnung für ein Luft-, Land- oder Wasserfahrzeug.

Eine derartige Propelleranordnung ist aus der Druckschrift EP 3 466 806 B1 bekannt und ist insbesondere zum Einsatz bei einem Flugzeug ausgelegt. Sie umfasst einen Propeller, der mehrere Propellerblätter umfasst, deren Einstellwinkel hydraulisch einstellbar ist. Angetrieben ist der Propeller mittels eines Triebwerks, das auch eine Hydraulikpumpe antreibt, die einen Basisdruck für eine Drucksteuereinrichtung liefert, mittels der ein Druck in einem Druckraum des Propellers einstellbar ist. Eine Änderung des Hydraulikdrucks in dem Druckraum führt zu einer Änderung des Einstellwinkels der Propellerblätter. Über den Druck in dem Druckraum wird eine Kolbeneinheit verstellt, die mit den Propellerblättern gekoppelt ist, die im Bereich einer Propellernabe drehbar gelagert sind. Der Einstellwinkel der Propellerblätter ist über den von der Drucksteuereinrichtung zur Verfügung gestellten Steuer- bzw. Regeldruck zwischen einem einer Segelstellung zugeordneten Einstellwinkel, bei dem die Propellerblätter im Flugbetrieb des betreffenden Flugzeugs den geringsten

Luftwiderstand bieten, einem minimalen, dem betreffenden Flugzeug einen Vortrieb zur Verfügung stellenden Einstellwinkel und einem negativen Einstellwinkel verstellbar, der einer Umkehrschubstellung der Propellerblätter entspricht. In der Umkehrschubstellung übt der Verstellpropeller bei gleichbleibender Drehrichtung des Propellers eine Bremskraft auf das betreffende Flugzeug aus. Diese Bremskraft ist ggf. nach einem Aufsetzen des Flugzeugs auf eine Landebahn erforderlich, um dessen Bremsweg zu verkürzen. Die Segelflugstellung ermöglicht es dem betreffenden Flugzeug, bei einem Ausfall des Triebwerks oder einem sonstigen Defekt ohne tatsächlichen Vortrieb über die Propeller und bei minimalem Luftwiderstand durch den Propeller sicher in einen Sinkflug überzugehen und zu landen oder bei einem mehrmotorigen Flugzeug weiterzufliegen. Bei der bekannten Propelleranordnung besteht das Problem, dass der der Drucksteuereinrichtung zur Verfügung gestellte Basisdruck abhängig ist vom Triebwerk.

Der Erfindung liegt die Aufgabe zugrunde, eine Propelleranordnung zu schaffen, bei der unabhängig von der Auslegung des Triebwerks eine Versorgung der Drucksteuereinheit mit einem Basisdruck gewährleistet ist.

Diese Aufgabe ist erfindungsgemäß durch die hydraulisch verstellbare Propelleranordnung mit den Merkmalen des Patentanspruches 1 gelöst.

Gemäß der Erfindung wird also eine hydraulisch verstellbare Propelleranordnung für ein Luft-, Land- oder Wasserfahrzeug vorgeschlagen, umfassend ein Triebwerk, eine Propellereinheit mit einem Propeller, der mindestens zwei Propellerblätter umfasst, deren Einstellwinkel hydraulisch einstellbar ist, eine Drucksteuereinheit, die einen Fluiddruck zum Einstellen des Einstellwinkels der Propellerblätter vorgibt und die über eine Steuerleitung hydraulisch mit einem Druckraum des Propellers verbunden ist, sowie eine Pumpeneinheit, die der Drucksteuereinheit ein Hydraulikfluid bereitstellt, das unter einem Basisdruck steht. Die Pumpeneinheit ist eine von dem Triebwerk der Propelleranordnung und der Drucksteuereinheit unabhängig angetriebene Einheit und umfasst mindestens eine elektrisch betriebene Hauptpumpe, die das unter dem Basisdruck stehende Hydraulikfluid für die Drucksteuereinheit bereitstellt.

Bei der Propelleranordnung nach der Erfindung ist also in Form der Pumpeneinheit eine Einrichtung vorgesehen, die zum Betrieb lediglich eine Stromversorgung für die beispielsweise als Zahnradpumpe oder Kolbenumlaufpumpe ausgebildete Hauptpumpe braucht und somit unabhängig von der Auslegung des Triebwerks und der Drucksteuereinheit an einer geeigneten Stelle des betreffenden Luft-, Land- oder Wasserfahrzeugs angeordnet werden kann.

Bei einer zweckmäßigen Ausführungsform der Propelleranordnung nach der Erfindung umfasst die Pumpeneinheit ein Gehäuse, das einen Tank für das Hydraulikfluid bildet und das von dem Triebwerk und der Drucksteuereinheit räumlich getrennt ist. Es ist lediglich eine hydraulische und ggf. elektrische Verbindung zu der Drucksteuereinheit und ggf. zu einer Steuereinrichtung der Propelleranordnung erforderlich.

Um sicher zu stellen, dass eine Leckage und/oder ein Hydraulikölmangel und damit ein nicht den Anforderungen entsprechender Betrieb der Pumpeneinheit erkannt werden kann, umfasst die Pumpeneinheit bei einer bevorzugten Ausführungsform der Propelleranordnung nach der Erfindung einen Füllstandsensor für das Hydraulikfluid. Fällt beispielsweise der Füllstand des Hydraulikfluids unter einen definierten Wert, kann mittels einer Steuereinrichtung an die Drucksteuereinheit ein Signal abgegeben werden, das insbesondere bei einem Flugzeug zu einem Verstellen der Propellerblätter in eine Segelflugstellung führt.

Des Weiteren umfasst die Pumpeneinheit zweckmäßigerweise eine Ausgangsöffnung und eine Eingangsöffnung, wobei die Ausgansöffnung und die Eingangsöffnung jeweils über eine Hydraulikleitung mit der Drucksteuereinheit verbunden sind. Eine der Hydraulikleitungen ist eine Versorgungsleitung, über die das unter dem Basisdruck stehende Hydraulikfluid der Drucksteuereinheit zur Verfügung gestellt wird. Die andere Hydraulikleitung ist eine Rücklaufleitung, über die das Hydraulikfluid von der Drucksteuereinheit zurück zu der Pumpeneinheit, insbesondere in deren Tank zurückgeführt wird.

Um den Druck überwachen zu können, mit dem das Hydraulikfluid der Drucksteuereinheit mittels der Pumpeneinheit bereitgestellt wird, umfasst die Pumpeneinheit vorzugsweise einen Drucksensor, der einen Hydraulikdruck stromab der Hauptpumpe erfasst.

Aus Redundanzgründen und zur Aufrechterhaltung eines sicheren Betriebs der Propelleranordnung nach der Erfindung umfasst die Pumpeneinheit vorzugsweise eine elektrisch betriebene Reservepumpe, die dazu eingerichtet ist, für die Drucksteuereinheit das Hydraulikfluid mit dem Basisdruck bereitzustellen, wenn der von der Hauptpumpe bereitgestellte Hydraulikdruck unter einen Mindestdruck fällt. Beispielsweise beträgt der Mindestdruck 5 bar. Wenn der Druck unter dem Mindestdruck liegt, erfolgt vorzugsweise ein automatisches Umschalten des Betriebs der Pumpeneinheit auf die Reservepumpe, beispielsweise über eine Steuereinrichtung der Propelleranordnung. Damit ist es möglich, das System bzw. die Propelleranordnung auch bei Ausfall der Hauptpumpe sicher weiter zu betreiben. Die Reservepumpe ist beispielsweise eine Zahnradpumpe oder eine Kolbenumlaufpumpe. Die Reservepumpe kann baugleich mit der Hauptpumpe sein, sich von dieser aber auch unterscheiden, beispielsweise eine geringere Leistung haben.

Um auch den von der Reservepumpe erzeugten Hydraulikdruck messen zu können, umfasst die Pumpeneinheit der Propelleranordnung nach der Erfindung vorzugsweise zusätzlich zu dem Drucksensor einen Reservedrucksensor.

Um ein integriertes System bereitzustellen, umfasst die Propelleranordnung vorzugsweise eine elektronische Steuereinrichtung, die über entsprechende Signalleitungen mit der Pumpeneinheit verbunden ist. Die elektronische Steuereinrichtung kann von einer sogenannten FADEC (Full Authority Digital Engine Control) gebildet sein, die eine insbesondere volldigitale Regelung der Propelleranordnung ermöglicht.

Bei einer bevorzugten Ausführungsform der Propelleranordnung nach der Erfindung ist die ein sogenanntes Beta-Ventil darstellende Drucksteuereinheit derart ausgelegt, dass sie einen Ventilschieber umfasst, dessen Stellung den Fluiddruck zum Einstellen des Einstellwinkels der Propellerblätter vorgibt. Ein Verfahren des Ventilschiebers führt zu einer Druckänderung in der mit dem Druckraum des Propellers verbundenen Steuerleitung, so dass der Kolben, mit dem die Propellerblätter verbunden sind und auf den der in dem Druckraum herrschende Druck wirkt, verlagert wird, was wiederum zu einem Verstellen des Einstellwinkels der Propellerblätter führt.

Bei einer bevorzugten Ausführungsform der Propelleranordnung nach der Erfindung umfasst die Steuerleitung ein Steuerrohr, auf dem der Ventilschieber gelagert ist, und das mit dem Druckraum des Propellers verbunden ist. Das Steuerrohr, das ein sogenanntes Beta-Rohr bildet und das gegenüber einem Gehäuse der Drucksteuereinheit axial verlagerbar sein kann, führt insbesondere aus der Drucksteuereinheit bis zu der Propellereinheit, wobei eine Nabe der Propellereinheit vorzugsweise von dem Steuerrohr durchgriffen ist.

Zum Verstellen des Ventilschiebers umfasst die Drucksteuereinheit eine Steuerstange, die mit dem Ventilschieber verbunden ist und die mechanisch, hydraulisch, elektrisch und/oder manuell betätigbar ist.

Die Drucksteuereinheit ist des Weiteren vorzugsweise derart ausgelegt, dass der Ventilschieber an seinem Umfang von einem Ringraum begrenzt ist, der mit dem von der Pumpeneinheit bereitgestellten Basisdruck beaufschlagt ist und der über mindestens eine Querbohrung des Ventilschiebers mit der Steuerleitung verbunden ist. Die Querbohrung wirkt zur Einstellung des Steuerdrucks bzw. Fluiddrucks in der Steuerleitung mit mindestens einer Querbohrung letzterer zusammen. In Abhängigkeit von einer Überdeckung der Querbohrung des Ventilschiebers mit der Querbohrung der Steuerleitung ändert sich der Steuerdruck bzw. Fluiddruck in der Steuerleitung.

Um beispielsweise im Falle eines Systemausfalls, wie einem Ausfall der Pumpeneinheit, das sichere Landen eines Flugzeugs zu ermöglichen, bei dem die Propelleranordnung nach der Erfindung zum Einsatz kommt, umfasst die Drucksteuereinheit vorzugsweise ein Segelflugstellungsventil, das dazu eingerichtet ist, den Fluiddruck in der Steuerleitung derart abzusenken, dass sich die Propellerblätter in eine Segelflugstellung verstellen. Der Verstellvorgang in die Segelflugstellung erfolgt insbesondere mittels Rückstellfedern, die an dem Kolben der Propellereinheit angreifen, und durch Fliehgewichte, die direkt auf die Propellerblätter wirken und die bei einer Rotation des Propellers eine Stellkraft auf die Propellerblätter ausüben, die in Richtung von deren Segelflugstellung wirkt.

Weitere Vorteile und vorteilhafte Ausgestaltungen des Gegenstandes der Erfindung sind der Beschreibung, den Zeichnungen und den Patentansprüchen entnehmbar.

Ein Ausführungsbeispiel einer hydraulisch verstellbaren Propelleranordnung nach der Erfindung ist in der Zeichnung schematisch vereinfacht dargestellt und wird in der Beschreibung näher erläutert. Es zeigt:
- Fig. 1: eine Überblicksdarstellung einer Propelleranordnung eines Flugzeugs;
- Fig. 2: einen Längsschnitt durch eine Propellereinheit der Propelleranordnung;

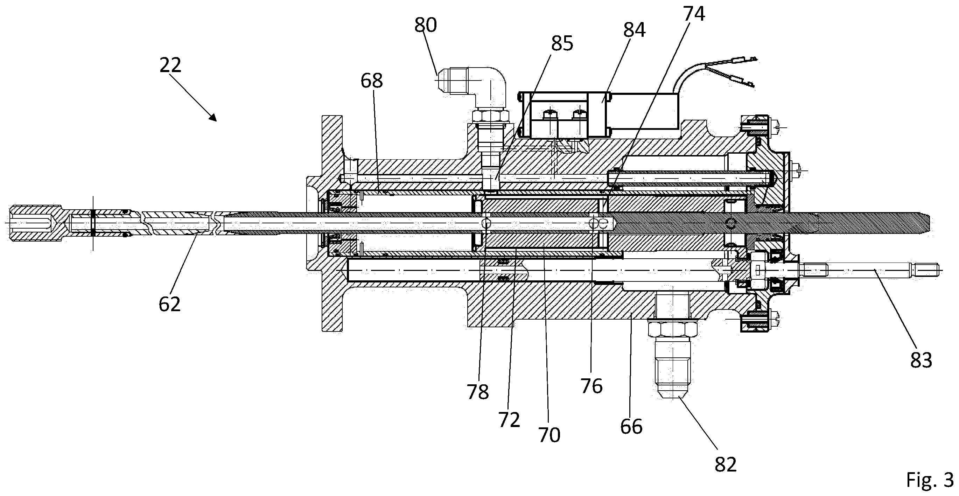

- Fig. 3: einen Längsschnitt durch eine Drucksteuereinheit der Propelleranordnung;
- Fig. 4: eine Pumpeneinheit der Propelleranordnung; und

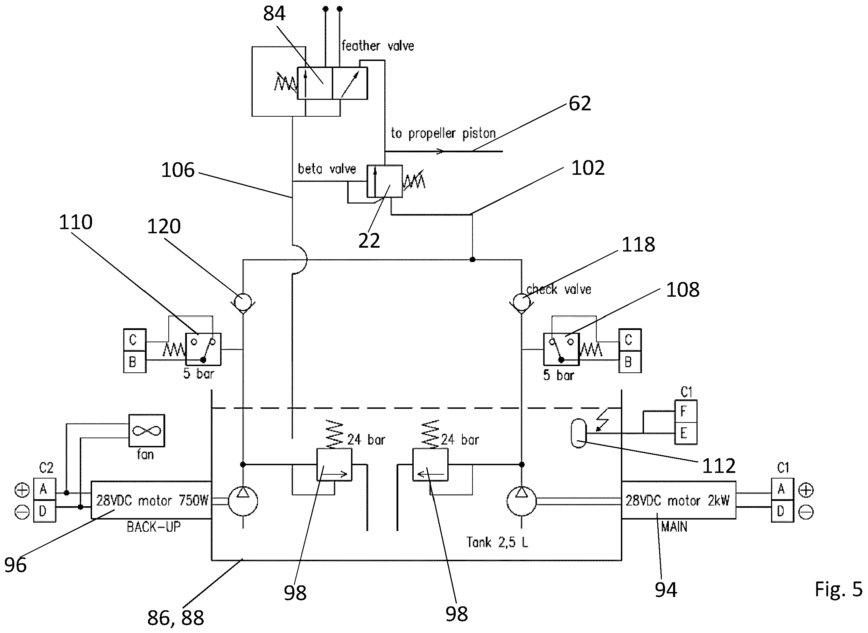

- Fig. 5: ein hydraulisches Schaltbild der Propelleranordnung.

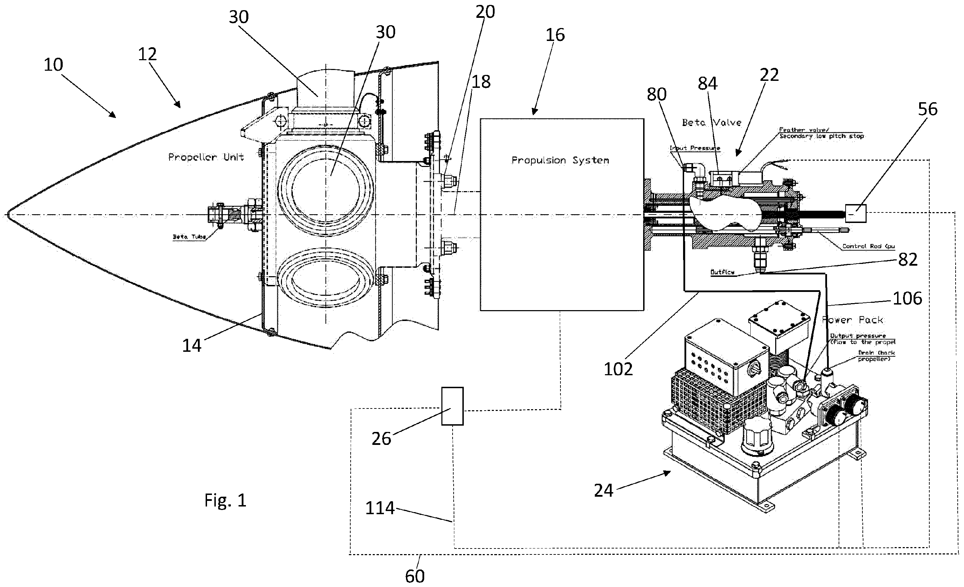

In Fig. 1 ist in stark schematisierter Weise eine Propelleranordnung 10 für ein Flugzeug, d.h. für ein Luftfahrzeug dargestellt. Die Propelleranordnung 10 umfasst eine Propellereinheit 12, die einen Propeller 14 aufweist, sowie ein Triebwerk 16, welches einen Verbrennungsmotor oder auch einen Elektromotor umfassen kann und den Propeller 14 über eine Antriebswelle 18 drehbar antreiben kann. Die Propellereinheit 12 ist über einen Befestigungsflansch 20 flugzeugfest montiert.

Des Weiteren umfasst die Propelleranordnung 10 eine Drucksteuereinheit 22, die zur hydraulischen Verstellung des Propellers 14 dient. Zudem weist die Propelleranordnung 10 eine Pumpeneinheit 24 auf, welche für die Drucksteuereinheit 22 ein Hydraulikfluid mit einem Basisdruck bereitstellt. Die Propelleranordnung umfasst des Weiteren eine elektronische Steuereinrichtung 26, die von einer sog. FADEC (Full Authority Digital Engine Control) gebildet sein kann.

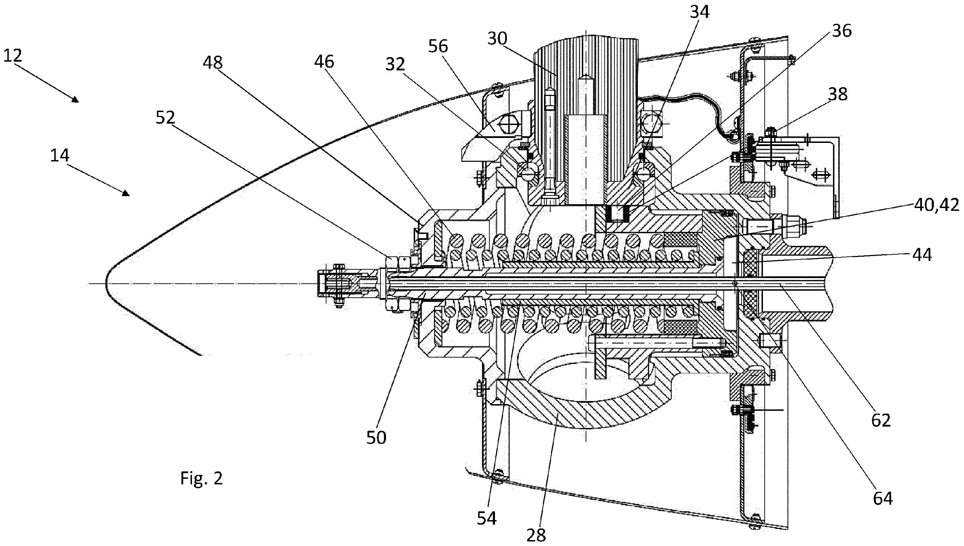

Der in Fig. 2 vergrößert dargestellte Propeller 14 umfasst eine Propellernabe 28, an welcher mehrere Propellerblätter 30 jeweils über ein Blattlager 32 verdrehbar gelagert sind. Die Propellerblätter 30 haben jeweils einen Blattfuß 34, an dessen radial nach innen weisenden Stirnseite ein Verstellzapfen 36 angeordnet ist, der in eine korrespondierende Ausnehmung eines Gleitsteins 38 eingreift, welcher mit einer Kolbeneinheit 40 verbunden ist. Die Kolbeneinheit 40 umfasst einen ringförmigen Kolben 42, der an einen Druckraum 44 grenzt, in dem ein Regeldruck zum Festlegen eines Einstellwinkels der Propellerblätter 30 herrscht.

Die Propellerblätter 30 können hinsichtlich ihres Einstellwinkels zwischen einer Segelflugstellung und einer maximalen Umkehrschubstellung hydraulisch verstellt werden. Dies erfolgt über eine Änderung des in dem Druckraum 44 herrschenden Hydraulikdrucks bzw. Regeldrucks.

Der Kolben 42 ist mittels einer Rückstellfederanordnung 46, die sich an einer Frontplatte 48 der Propellernabe 28 abstützt, in Richtung der in Fig. 2 dargestellten Stellung vorgespannt, in der die Propellerblätter 30 ihre Segelflugstellung einnehmen. Die Rückstellfederanordnung 46, die aus Schraubenfedern gebildet ist, umgreift ein zentrales Führungsrohr 50, welches die Kolbeneinheit 40 durchgreift. Stirnseitig ist das Führungsrohr 50 mit Anschlagmuttern 52 versehen, die sich in der Segelflugstellung an der Außenseite der Frontplatte 48 der Propellernabe 28 abstützen. Das Führungsrohr 50 ist von einer rohrartigen Buchse 54 umgriffen, welche von einer der Federn der Rückstellfederanordnung 46 gegen den Kolben 42 gedrückt ist und mit ihrer dem Kolben 42 abgewandten Stirnseite einen Anschlag bildet, der einen minimalen Blattwinkel der Propellerblätter 30 in der Umkehrschubstellung definiert.

Im Flugbetrieb bzw. bei rotierendem Propeller 14 wird zudem durch Fliehgewichte 56 ein Verstellmoment auf die Propellerblätter 30 ausgeübt, welches in Richtung der Segelflugstellung wirkt.

Zur Messung des Einstellwinkels bzw. Blattwinkels der Propellerblätter 30 kann der Propeller 14 eine Blattwinkelmesseinrichtung 56 aufweisen, die beispielsweise einen im Bereich der Drucksteuereinheit 22 angeordneten Wegsensor umfasst, der als sog. LVDT (Linear Variable Differential Transformer) ausgebildet sein kann, der über eine Signalleitung 60 mit der Steuereinrichtung 26 verbunden ist.

Um den Hydraulikdruck bzw. Fluiddruck in dem Druckraum 44 des Propellers 14 verändern zu können, umfasst die Propelleranordnung 10 ein als sog. Beta-Rohr ausgebildetes Steuerrohr 62, dessen Innenraum über mindestens eine Querbohrung 64 mit dem Druckraum 44 verbunden ist und das die Propellernabe 28 in dem Führungsrohr 50 in Achsrichtung vollständig durchgreift. Das Steuerrohr 62, das sich zusammen mit dem Kolben 42 bewegt, durchgreift mit seinem dem Propeller 14 abgewandten Bereich die Drucksteuereinheit 22 bzw. ist Teil derselben. Der Wegsensor der Blattwinkelmesseinrichtung 56 erfasst eine Bewegung des Steuerrohrs 62.

Die Drucksteuereinheit 22, die ein sog. Beta-Ventil bildet, umfasst ein Ventilgehäuse 66, in das eine Ventilbuchse 68 eingesetzt ist, deren Achse mit der Achse des Steuerrohrs 62 zusammenfällt, das das Ventilgehäuse durchgreift. In der Ventilbuchse 68 ist ein Ventilschieber 70 verschiebbar geführt. Der Ventilschieber 70 begrenzt an seinem Umfang einen Ringraum 72, der radial außen von der Ventilbuchse 68 begrenzt ist. Der Ringraum 72 ist über Querbohrungen 74 mit dem Steuerrohr 62 verbunden. Das Steuerrohr 62 hat im Bereich der Ventilbuchse 68 Querbohrungen 76 und 78.

Des Weiteren hat die Drucksteuereinheit 22 einen Einlass 80 und einen Auslass 82. Über den Auslass 82 wird Hydrauliköl von der Drucksteuereinheit 22 und dem Druckraum 44 der Propellereinheit 12 abgeführt. Über den Einlass 80 wird ein Hydraulikfluid mit einem Basisdruck bereitgestellt, das über einen Kanal 85 zu dem Ringraum 72 zwischen der Ventilbuchse 68 und dem Ventilschieber 70 geführt wird.

Auf Basis des in dem Ringraum 72 wirkenden Basisdrucks wird in Abhängigkeit von einem Überdeckungsgrad zwischen den Querbohrungen 74 und den Querbohrungen 76 ein Steuerdruck bzw. Fluiddruck in dem Steuerrohr 62 und damit in dem Druckraum 44 des Propellers 14 eingestellt. Eine Verlagerung des Ventilschiebers 70 erfolgt mittels einer manuell, hydraulisch, elektrisch und/oder mechanisch betätigbaren Steuerstange 83, welche mit dem Ventilschieber 70 verbunden ist.

Des Weiteren umfasst die Drucksteuereinheit 22 ein Segelflugstellungsventil 84, mittels dessen im Bedarfsfall der in dem Ringraum 72 herrschende Druck herabgesetzt werden kann, sodass sich der Steuerdruck und damit der in dem Druckraum 44 des Propellers 14 herrschende Druck reduziert und sich die Propellerblätter 30 aufgrund der Wirkung der Fliehgewichte 56 und der Rückstellfederanordnung 46 selbsttätig in ihre Segelflugstellung zurückstellen.

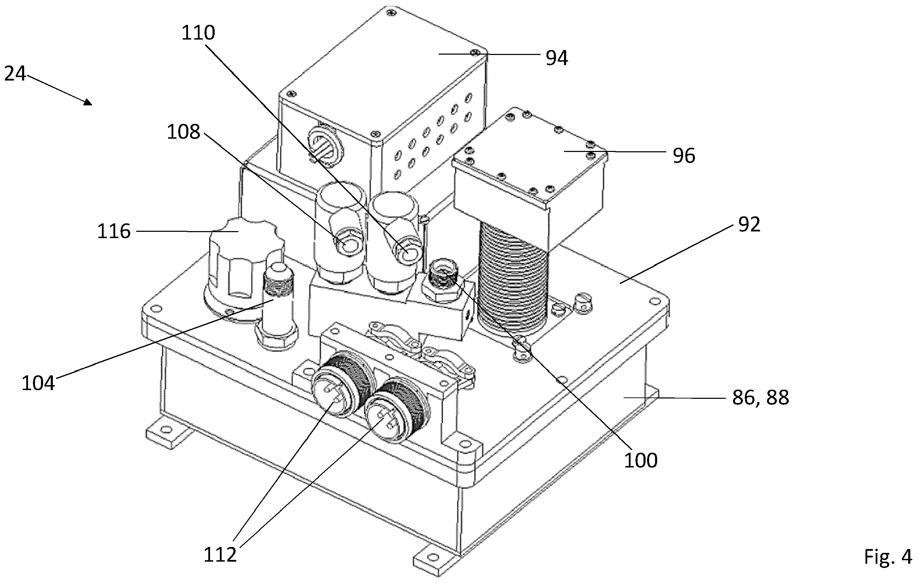

Das Hydrauliköl mit dem Basisdruck wird mittels der in Fig. 4 in Alleinstellung dargestellten Pumpeneinheit 24 bereitgestellt. Die Pumpeneinheit 24 umfasst ein Gehäuse 86 mit zumindest im Wesentlichen rechteckigem Grundriss, welches einen Tank 88 für Hydrauliköl bildet. Der Tank 88 stellt eine Ölwanne dar, die mittels eines Deckels 92 verschlossen ist. Über einen Verschluss 116 am Deckel 92 der Pumpeneinheit 24 kann Hydrauliköl in den Tank 88 gefüllt werden. Dieser hat ein Fassungsvermögen von etwa 2,5 1. Die Pumpeneinheit 24 ist mit einem Füllstandsensor 122 versehen, der an die Steuereinrichtung 26 ein Steuersignal abgibt, wenn das Hydrauliköl in dem Tank 88 einen Mindestfüllstand unterschreitet.

Zudem weist die Pumpeneinheit 24 eine elektrische, beispielsweise als Zahnradpumpe ausgebildete Hauptpumpe 94 und eine elektrische, ebenfalls beispielsweise als Zahnradpumpe ausgebildete Reservepumpe 96 auf. Die Hauptpumpe 94 arbeitet mit einer elektrischen Spannung von beispielsweise 28 Volt und erbringt eine Leistung von beispielsweise 2 kW. Die Reservepumpe 96 arbeitet ebenfalls mit einer elektrischen Spannung von beispielsweise 28 Volt und erbringt eine Leistung von beispielsweise 750 W. Der maximale Förderdruck, den die Hauptpumpe 94 und die Reservepumpe 96 bereitstellen können, wird jeweils mittels eines betreffenden Druckbegrenzers 98 eingestellt und beträgt beispielsweise 24 bar.

Die Pumpeneinheit 24 hat eine Auslassöffnung 100, welche über eine Hydraulikleitung 102 mit dem Einlass 80 der Drucksteuereinheit 22 verbunden ist. Eine Rücklauföffnung 104 der Pumpeneinheit 24 ist über eine Hydraulikleitung 106 mit dem Auslass 82 der Drucksteuereinheit 22 verbunden.

Stromauf der Auslassöffnung 100 ist den beiden Pumpen 94 und 96 jeweils ein Rückschlagventil 118 bzw. 120 zugeordnet, das verhindert, dass Hydrauliköl, das von einer der beiden Pumpen 94 und 96 der Drucksteuereinheit 22 bereitgestellt wird, in Richtung der jeweils anderen der beiden Pumpen 94 und 96 strömt.

Des Weiteren umfasst die Pumpeneinheit 24 einen Hauptdrucksensor 108 für den von der Hauptpumpe 94 bereitgestellten Hydraulikdruck und einen Reservedrucksensor 110 für den von der Reservepumpe bereitgestellten Hydraulikdruck. Die Drucksensoren 108 und 110 sind derart ausgelegt, dass sie ein Signal insbesondere an die Steuereinrichtung 26 abgeben, sobald der von der jeweiligen Pumpe 94 bzw. 96 bereitgestellte Druck unter 5 bar liegt.

Zudem umfasst die Pumpeneinheit 24 elektrische Verbindungselemente 112, über die die Pumpeneinheit 24 einerseits mit einer Stromquelle und andererseits über Signalleitungen 114 mit der elektronischen Steuereinrichtung 26 verbunden sein kann. Die Signalleitungen 114 führen auch zu dem Segelflugstellungsventil 84 und zu dem Triebwerk 16.

Die vorstehend beschriebene Propelleranordnung 10 arbeitet in nachfolgend beschriebener Weise.

Angetrieben wird der Propeller 14 über die Antriebswelle 18 von dem Triebwerk 16 mit einer vorgegebenen Drehzahl.

In ihrer Grundstellung nehmen die Propellerblätter 30 ihre jeweilige Segelflugstellung ein, in welcher der Hydraulikdruck in dem Druckraum 44 des Propellers 14 nicht ausreicht, um den Kolben 42 gegen die Rückstellkraft der Rückstellfederanordnung 46 und Fliehgewichte 56 zu verstellen.

Mittels der Pumpeneinheit, bei der im Standardbetrieb die Hauptpumpe 94 angetrieben wird, wird der Drucksteuereinheit 22 über die Hydraulikleitung 102 ein Basisdruck bereitgestellt. Durch Verlagerung des Ventilschiebers 70 mittels der Steuerstange 83 kann ausgehend von dem in dem Ringraum 72 herrschenden Basisdruck der Druck in dem Steuerrohr/Beta-Rohr 62 und damit der Druck in dem Druckraum 44 erhöht werden, wodurch der Kolben 42 entgegen der Rückstellkräfte verstellt und die Einstellwinkel der Propellerblätter 30 verändert werden. Der Basisdruck, der mittels der Hauptpumpe 94 bereitgestellt wird, beträgt beispielsweise max. 24 bar.

Bei einem Ausfall oder Defekt der Hauptpumpe 94 kann der Förderdruck unter 5 bar fallen. Dies wird von dem Hauptdrucksensor 108 erkannt, der daraufhin ein Steuersignal an die Steuereinrichtung 26 übergibt, welche dann den Betrieb der Reservepumpe 96 auslöst, die daraufhin über Hydraulikleitungen 102 einen hinreichenden Basisdruck für die Drucksteuereinheit 22 bereitstellt.

In einem Störfall kann die Steuereinrichtung 26 ein Steuersignal an das Segelflugstellungsventil 84 abgeben, das dann das System im Wesentlichen drucklos schaltet, so dass der in dem Steuerrohr 62 und dem Druckraum 44 herrschende Hydraulikdruck abfällt, wodurch sich die Propellerblätter 30 aufgrund der Rückstellkräfte der Rückstellfederanordnung 46 und der Fliehgewichte 56 selbsttätig in ihre Segelflugstellung verstellen.

### Bezugszeichenliste

- 10: Propelleranordnung
- 12: Propellereinheit
- 14: Propeller
- 16: Triebwerk
- 18: Antriebswelle
- 20: Befestigungsflansch
- 22: Drucksteuerventil
- 24: Pumpeneinheit
- 26: Steuereinrichtung
- 28: Propellernabe
- 30: Propellerblatt
- 32: Blattlager
- 34: Blattfuß
- 36: Verstellzapfen
- 38: Gleitstein
- 40: Kolbeneinheit
- 42: Kolben
- 44: Druckraum
- 46: Rückstellfederanordnung
- 48: Frontplatte
- 50: Führungsrohr
- 52: Anschlagmutter
- 54: Buchse (Anschlag für minimalen Blattwinkel)
- 56: Blattwinkelmesseinrichtung
- 58: Wegsensor
- 60: Signalleitung
- 62: Steuerrohr
- 64: Querbohrung
- 66: Ventilgehäuse
- 68: Ventilbuchse
- 70: Ventilschieber
- 72: Ringraum
- 74: Querbohrung
- 76: Querbohrung
- 78: Querbohrung
- 80: Einlass
- 82: Einlass
- 83: Steuerstange
- 84: Segelflugstellungsventil
- 85: Kanal
- 86: Gehäuse
- 88: Tank
- 92: Deckel
- 94: Hauptpumpe
- 96: Reservepumpe
- 98: Druckbegrenzer
- 100: Auslassöffnung
- 102: Hydraulikleitung
- 104: Rücklauföffnung
- 106: Hydraulikleitung
- 108: Hauptdrucksensor
- 110: Reservedrucksensor
- 112: elektrische Verbindungselemente
- 114: Signalleitung
- 116: Verschluss
- 118: Rückschlagventil
- 120: Rückschlagventil
- 122: Füllstandsensor

## Patentansprüche

1. Hydraulisch verstellbare Propelleranordnung für ein Luft-, Land- oder Wasserfahrzeug, umfassend ein Triebwerk (16), eine Propellereinheit (12) mit einem Propeller (14), der mindestens zwei Propellerblätter (30) umfasst, deren Einstellwinkel hydraulisch einstellbar ist, eine Drucksteuereinheit (22), die einen Fluiddruck zum Einstellen des Einstellwinkels der Propellerblätter (30) vorgibt und die über eine Steuerleitung hydraulisch mit einem Druckraum (44) des Propellers (14) verbunden ist, sowie eine Pumpeneinheit (24), die der Drucksteuereinheit (22) ein Hydraulikfluid bereitstellt, das unter einem Basisdruck steht, **dadurch gekennzeichnet, dass** die Pumpeneinheit (24) eine von dem Triebwerk (16) und der Drucksteuereinheit (22) unabhängig angetriebene Einheit ist und mindestens eine elektrisch betriebene Hauptpumpe (94) umfasst, die das unter dem Basisdruck stehende Hydraulikfluid für die Drucksteuereinheit (22) bereitstellt.

2. Hydraulisch verstellbare Propelleranordnung nach Anspruch 1, **dadurch gekennzeichnet, dass** die Pumpeneinheit (24) ein Gehäuse (86) umfasst, das einen Tank (88) für das Hydraulikfluid bildet und von dem Triebwerk (16) und der Drucksteuereinheit (22) räumlich getrennt ist.

3. Hydraulisch verstellbare Propelleranordnung nach Anspruch 1 oder 2, **dadurch gekennzeichnet, dass** die Pumpeneinheit (24) einen Füllstandsensor (122) für das Hydraulikfluid umfasst.

4. Hydraulisch verstellbare Propelleranordnung nach einem der Ansprüche 1 bis 3, **dadurch gekennzeichnet, dass** die Pumpeneinheit (24) eine Auslassöffnung (100) und eine Rücklauföffnung (104) für Hydraulikfluid umfasst und dass die Auslassöffnung (100) und die Rücklauföffnung (104) jeweils über eine Hydraulikleitung (102, 106) mit der Drucksteuereinheit (22) verbunden sind.

5. Hydraulisch verstellbare Propelleranordnung nach einem der Ansprüche 1 bis 4, **dadurch gekennzeichnet, dass** die Pumpeneinheit (24) einen Drucksensor (108) umfasst, der einen Hydraulikdruck stromab der Hauptpumpen (94) erfasst.

6. Hydraulisch verstellbare Propelleranordnung nach einem der Ansprüche 1 bis 5, **dadurch gekennzeichnet, dass** die Pumpeneinheit (24) eine elektrisch betriebene Reservepumpe (96) umfasst, die dazu eingerichtet ist, das Hydraulikfluid mit dem Basisdruck bereitzustellen, wenn der von der Hauptpumpe (94) bereitgestellte Hydraulikdruck unterhalb eines Mindestdrucks liegt.

7. Hydraulisch verstellbare Propelleranordnung nach Anspruch 6, **dadurch gekennzeichnet, dass** die Pumpeneinheit (24) einen Reservedrucksensor (110) umfasst, der einen von der Reservepumpe (96) bereitgestellten Hydraulikdruck erfasst.

8. Hydraulisch verstellbare Propelleranordnung nach einem der Ansprüche 1 bis 7, **gekennzeichnet durch** eine elektronische Steuereinrichtung (26), mit der die Pumpeneinheit (24) verbunden ist.

9. Hydraulisch verstellbare Propelleranordnung nach einem der Ansprüche 1 bis 8, **dadurch gekennzeichnet, dass** die Drucksteuereinheit (22) einen Ventilschieber (70) umfasst, dessen Stellung gegenüber einem Ventilgehäuse (66) den Fluiddruck zum Einstellen des Einstellwinkels der Propellerblätter (30) vorgibt.

10. Hydraulisch verstellbare Propelleranordnung nach Anspruch 9, **dadurch gekennzeichnet, dass** die Steuerleitung ein Steuerrohr (62) umfasst, auf dem der Ventilschieber (70) verlagerbar ist und das mit dem Druckraum (44) des Propellers (14) verbunden ist.

11. Hydraulisch verstellbare Propelleranordnung nach Anspruch 9 oder 10, **dadurch gekennzeichnet, dass** der Ventilschieber (70) mit einer Steuerstange (83) verbunden ist, die mechanisch, hydraulisch, elektrisch und/oder manuell betätigbar ist.

12. Hydraulisch verstellbare Propelleranordnung nach einem der Ansprüche 9 bis 11, **dadurch gekennzeichnet, dass** der Ventilschieber (70) an seinem Umfang von einem Ringraum (72) begrenzt ist, der mit dem Basisdruck beaufschlagt ist und der über mindestens eine Querbohrung (74) mit der Steuerleitung verbunden ist.

13. Hydraulisch verstellbare Propelleranordnung nach einem der Ansprüche 1 bis 12, **dadurch gekennzeichnet, dass** die Drucksteuereinheit (22) ein Segelstellungsventil (84) umfasst, das dazu eingerichtet ist, den Fluiddruck in der Steuerleitung derart abzusenken, dass sich die Propellerblätter (30) in eine Segelflugstellung verstellen.
